Europäisches Patentamt

European Patent Office

Office européen des brevets

(11) Veröffentlichungsnummer: **0 278 333 B1**

# EUROPÄISCHE PATENTSCHRIFT

(45) Veröffentlichungstag der Patentschrift: **29.04.92**

(51) Int. Cl.5: **E03C 1/10**, G05D 16/16

(21) Anmeldenummer: **88101271.0**

(22) Anmeldetag: **29.01.88**

(54) **Steuervorrichtung für einen Rohrtrenner.**

(30) Priorität: **06.02.87 DE 3703715**

(43) Veröffentlichungstag der Anmeldung:
**17.08.88 Patentblatt 88/33**

(45) Bekanntmachung des Hinweises auf die
Patenterteilung:
**29.04.92 Patentblatt 92/18**

(84) Benannte Vertragsstaaten:
**AT CH DE FR LI**

(56) Entgegenhaltungen:
**EP-A- 0 182 004**
**FR-A- 2 407 302**
**FR-A- 2 560 340**

(73) Patentinhaber: **Schubert & Salzer GmbH & Co.
Ingolstadt-Armaturen KG
W-8070 Ingolstadt(DE)**

(72) Erfinder: **Lechermeier, Franz
Altenhofstrasse 15
W-8070 Ingolstadt-Friedrichshofen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(−/2.18/2.0)

**Beschreibung**

Die vorliegende Erfindung betrifft ein Vorsteuerventil eines zwischen einer Zuflußleitung und einer Abflußleitung angeordneten, über eine Antriebskammer steuerbaren Rohrtrenners, zur wechselweisen Verbindung der Antriebskammer mit der Zuflußleitung oder einer Entleerleitung, wobei das Vorsteuerventil je eine mit der Zuflußleitung und der Abflußleitung in Verbindung stehende Druckkammer, ein zwischen den Druckkammern, angeordnetes, abflußseitig zusätzlich mit einem Sicherheitswert beaufschlagtes Druckvergleichselement sowie ein vom Druckvergleichselement mit Hilfe zusammenarbeitender Anschläge antreibbares Steuerelement zum wechselweisen Herstellen oder Unterbrechen der Verbindung zwischen Antriebskammer und Zuflußleitung aufweist.

Derartige Vorsteuerventile sollen labile Betriebszustände auch bei geringen Entnahmemengen abflußseitig vom Rohrtrenner vermeiden. Sie sollen sicherstellen, daß die Antriebskammer nur dann mit der Zuflußseite eines einem Rohrtrenner vorgeschalteten Absperrventils verbunden wird, wenn die für eine Freigabe des Durchflusses durch den Rohrtrenner gewollten Druckverhältnisse gegeben sind. Dieses Ziel soll mit Hilfe von Vorsteuerventilen mit zwei relativ zueinander verstellbaren Schaltorganen erreicht werden (DE-C-2.806.310; entspricht der FR-A-2 407 302). Bei einer ersten Ausführung (Fig. 2) kann das Ventilorgan, das die Verbindung zwischen Zuflußseite und Antriebskammer steuert und zu diesem Zweck dichtend auf dem das Druckvergleichselement bildenden Kolben geführt wird, hängenbleiben, so daß es dann dieselben Bewegungen wie dieses ausführt. Eine einwandfreie Funktion des Vorsteuerventils ist somit nicht mehr gewährleistet, da bei geringen Entnahmemengen das Druckvergleichselement und somit auch das Ventilorgan eine Zwischenstellung einnimmt, so daß auch in der Antriebskammer des Absperrventils indifferente Verhältnisse vorliegen.

Bei einer zweiten Ausführung (Fig. 3) der DE-C-2.806.310 ist dem Kolben, der die Entleerung der Antriebskammer steuert, eine Druckfeder zugeordnet, die dem abflußseitigen, auf den Kolben einwirkenden Druck entgegenwirkt. Der zuflußseitige Druck wirkt auf ein Ventilorgan, das räumlich vom Kolben getrennt ist und zur Verbindungsgfreigabe zwischen Zuflußseite und Antriebskammer durch den auflaufenden Kolben von seinem Sitz abhebbar ist. Die Verbindungsfreigabe zwischen Antriebskammer und Zuflußseite hängt somit in erster Linie von der Druckfeder und erst sekundär von der Druckdifferenz zwischen Zuflußseite und Abflußseite ab. Eine Anpassung an die tatsächlich gegebenen Druckverhältnisse ist somit nur bedingt gegeben. Findet das Vorsteuerventil in Anlagen mit verschiedenen Druckverhältnissen Anwendung, so ist jeweils eine entsprechende Anpassung durch geeignete Wahl der Druckfeder vorzunehmen.

Aufgabe der vorliegenden Erfindung ist daher die Schaffung eines Vorsteuerventils der genannten Art, das die genannten Nachteile nicht aufweist und auch bei geringen Entnahmemengen noch eine gleichförmige Entnahme ermöglicht und sich selbsttätig an gegebene Druckverhältnisse anpaßt.

Diese Aufgabe wird erfindungsgemäß dadurch gelöst, daß das Druckvergleichselement und das Steuerelement einen zweiten Satz kooperierender Anschläge aufweisen, die zu dem ersten Satz koopierender Anschläge so angeordnet sind, daß sie bei einer Bewegungsumkehr des Druckvergleichselementes eine Mitnahme des Steuerelementes erst nach Durchlaufen eines festgelegten Leerhubweges zulassen, und daß die zuflußseitige Druckkammer zwischen Druckvergleichselement und Steuerelement angeordnet ist. Die Verbindung der Antriebskammer mit der Zuflußseite bzw. mit der Entleerleitung efolgt auf diese Weise allein in Abhängigkeit von der Position des Steuerelementes. Diese Position des Steuerelementes bleibt unverändert, solange das Druckvergleichselement seine Position nicht oder nur geringfügig ändert. Die Anordnung der zuflußseitigen Druckkammer zwischen Steuerelement und Druckvergleichselement erlaubt es nämlich letzterem, innerhalb gewisser Grenzen Bewegungen durchzuführen, ohne hierbei gleich das Steuerelement mitnehmen zu müssen. Geringe Druckschwankungen führen deshalb noch nicht zu einer Umschaltung des Rohrtrenners, was zu einer Stabilisierung der Betriebsverhältnisse führt. Die beiden Anschlagspaare räumen dem Druckvergleichselement die Möglichkeit zu geringen Pendelbewegungen ein, ohne daß dies sofort zu einem Verstellen des Steuerelementes führt, ermöglichen aber andererseits bei großen Druckunterschieden, bei welchen das Druckvergleichselement größere Hubwege zurücklegen muß, nach Durchlaufen eines festgelegten Leerhubweges durch das Druckvergleichselement eine Mitnahme des Steuerelementes durch das Druckvergleichselement, wodurch das Steuerelement in seine andere Arbeitsposition gebracht wird. Da zwei Anschlagpaare vorgesehen sind, trifft das Gesagte für beide Stellrichtungen zu.

Prinzipiell kann das Sicherheitselement als eine Fläche des Druckvergleichselementes ausgebildet sein, um welche die der abflußseitigen Druckkammer zugewandte Stirnfläche des Druckvergleichselementes größer ist als die der zuflußseitigen Druckkammer zugewandte Stirnfläche. Da sich die wirksame Kraft als Produkt von Druck und Wirkfläche ergibt, erfolgt ein Umschalten des Vorsteuerventils bei verschiedenen Drücken bei verschiedenen Druckdifferenzen. Um sicherzustellen, daß bei immer gleichen Druckdifferenzen zwischen Zuflußseite und Abflußseite geschaltet wird, ist es vorteilhaft, wenn das Sicherheitselement als Druckfeder
ausgebildet ist, welche das Druckvergleichselement
in gleicher Richtung wie die abflußseitige Druckkammer beaufschlägt. Gemäß einer einfachen Ausbildung des Vorsteuerventils ist dabei die Druckfeder innerhalb der mit der Abflußseite des Rohrtrenners in Verbindung stehenden Druckkammer angeordnet.

Das Steuerelement ist als Steuerkolben ausgebildet, der mit Hilfe mehrerer Ringdichtungen dichtend im Gehäuse geführt wird. Das Druckvergleichselement ist in seinen Dimensionen völlig
unabhängig von jenen des Steuerelementes. Selbst
wenn der eine Anschlag des Steuerelementes dichtend im Druckvergleichselement geführt wird, besteht somit keine Gefahr des Verklebens des Anschlages mit dem Druckvergleichselement, da die
relativ hohe Reibung der Ringdichtungen des Steuerelementes im Gehäuse einerseits und die relativ
hohen Stellkräfte am Druckvergleichselement eine
Relativbewegung zwischen Druckvergleichselement
und Steuerelement gewährleisten, solange nicht
die Anschläge des einen oder des anderen Anschlagpaares zusammenarbeiten. Um die Relativbewegungen zwischen Druckvergleichselement und
Steuerelement zu erleichtern und um außerdem
das Steuerelement möglichst klein ausbilden zu
können, ist gemäß einer vorteilhaften Ausbildung
des erfindungsgemäßen Ventils vorgesehen, daß
einer der beiden dem Steuerelement zugeordneten
Anschläge mit radialem Spiel in einer einseitig geschlossenen Bohrung des Druckvergleichselementes angeordnet und mit dem anderen Anschlag des
Steuerelementes durch eine Kolbenstange verbunden ist, die mit radialem Spiel durch einen Anschlagring hindurchgeführt wird, welcher die beiden
Anschläge des Druckvergleichselementes bildet
und mit axialem Spiel zwischen den beiden Anschlägen des Steuerelementes angeordnet ist. Das
radiale Spiel zwischen Anschlag und Druckvergleichselement und zwischen Kolbenstange und
Anschlagring ermöglicht eine leichtgängige Relativbewegung zwischen Druckvergleichselement und
Steuerelement. Bei dieser Anordnung des mit dem
Steuerelement verbundenen Anschlags im Druckvergleichselement befindet sich dieser Anschlag in
einem Element, das ohnehin möglichst groß ausgebildet ist, damit große Stellkräfte zur Verfügung
stehen.

Eine fertigungsgünstige Ausbildung ergibt sich
erfindungsgemäß dadurch, daß zur Aufnahme des
dem Steuerelement zugeordneten Anschlages das
Druckvergleichselement eine Büchse trägt, die an
ihrem dem Steuerelement abgewandten Ende offen
ist und an ihrem dem Steuerelement zugewandten
Ende einen Anschlag trägt.

Gemäß einer vorteilhaften Ausführung, die in
einfacher Weise einen Druckausgleich auf den beiden Seiten des Steuerelementes bzw. eines mit
diesem verbundenen Anschlages sicherstellt, ist erfindungsgemäß das Steuerelement in einer einseitig geschlossenen Bohrung des Gehäuses angeordnet, während die den Druckkammern abgewandte Seite der Bohrung durch eine Axialbohrung
im Steuerelement mit der zwischen dem Steuerelement und dem Druckvergleichselement angeordneten Druckkammer verbunden ist.

Um die Gefahr von Verkantungen zwischen
Druckvergleichselement und Steuerelement auszuschließen, ist gemäß einer bevorzugten Ausbildung
des Erfindungsgegenstandes vorgesehen, daß die
Kolbenstange mit radialem Spiel durch die Axialbohrung im Steuerelement hindurch bis zu dem
dem Druckvergleichselement abgewandten Ende
des Steuerelementes reicht und hier einen Anschlag zur Zusammenarbeit mit dem Steuerelement trägt. Die Kolbenstange kann auf diese Weise
sowohl gegenüber dem Druckvergleichselement als
auch gegenüber dem Steuerelement Radialbewegungen ausführen, ohne daß hierdurch die Funktionsfähigkeit beeinträchtigt wird.

Zur Erleichterung des Druckausgleiches weist
vorteilhafterweise das Steuerelement an seinem mit
einem Anschlag zusammenarbeitenden Stirnende
mindestens eine von der Axialbohrung radial nach
außen führende Nut auf. Auf diese Weise wird
sichergestellt, daß auch bei Anlage des Anschlages
am Steuerelement der Druckausgleich durch die
Axialbohrung des Steuerelementes hindurch nicht
beeinträchtigt wird.

Die Lebensdauer der vom Steuerelement getragenen Ringdichtungen wird wesentlich erhöht,
wenn gemäß einer weiteren vorteilhaften Ausgestaltung des erfindungsgemäßen Vorsteuerventils die
im Hubbereich des als Steuerkolben ausgebildeten
Steuerelementes endende Entleerleitung und die
Verbindungsleitung zur Antriebskammer des Rohrtrenners in Ringnuten im Gehäuse enden, die beidseitig Anfasungen aufweisen.

Damit der beim Freigeben des Durchflusses
durch den Rohrtrenner abflußseitig auftretende
Druckanstieg nicht sofort zu einem Druckanstieg in
der abflußseitigen Druckkammer führt und bei geringen Entnahmemengen eine Bewegung des
Druckvergleichselementes provoziert, ist vorzugsweise zwischen der Abflußseite des Rohrtrenners
und der abflußseitigen Druckkammer eine Vorrichtung vorgesehen, die bei den Rohrtrenner durchströmendem Medium einen Druckanstieg in der
abflußseitigen Druckkammer verhindert.

Vom Prinzip her spielt es keine Rolle, wie das
Druckvergleichselement eine hydraulische Trennung der beiden Druckkammern bewirkt. Eine besonders hohe Sicherheit, daß das Medium von der Abflußseite nicht zur Zuflußseite gelangen kann, wird zweckmäßigerweise dadurch erreicht, daß das Druckvergleichselement zwei im Abstand voneinander angeordnete Rollmembranen aufweist und der von den Rollmembranen eingeschlossene Zwischenraum über eine Belüftungsbohrung mit der Atmosphäre in Verbindung steht.

Bei der Bewegung des Druckvergleichselementes in Richtung zur abflußseitigen Druckkammer verläßt das hierin befindliche Medium diese Druckkammer und gelangt in die abflußseitige Leitung und kann aus dieser entnommen werden. Je größer die Druckkammer ist, desto größer ist auch das durch diese Druckkammer gebildete Reservoir.

Aus diesem Grunde weist gemäß einer zweckmäßigen Ausführung des erfindungsgemäßen Vorsteuerventils das Druckvergleichselement eine Querschnittsfläche auf, die ein Vielfaches, vorzugsweise das 20- bis 50-fache, der Querschnittsfläche des Steuerelementes beträgt. Auf diese Weise kann auch bei sehr geringen Entnahmemengen, z.B. bei Zahnarzt-Schleifturbinen, trotz vorübergehenden Unterbrechens des Durchflusses durch den Rohrtrenner eine kontinuierliche Entnahme erreicht werden.

Eine zweckmäßige erfindungsgemäße Maßnahme, um labile Betriebszustände am Vorsteuerventil und damit auch am Rohrtrenner zu vermeiden, ist es, den Leerhubweg des Druckvergleichselementes und die Federkonstante der Druckfeder so aufeinander abzustimmen, daß das Druckvergleichselement bei seiner Bewegung in Richtung zum Steuerelement erst bei Erreichen eines Druckunterschiedes zwischen Zuflußseite und Abflußseite von 0,1 bis 0,2 bar auf das Steuerelement aufläuft und dieses antreibt. Während bei der Bewegung des Druckvergleichselementes in Richtung zur abflußseitigen Druckkammer die dieser Druckkammer zugeordnete Druckfeder gespannt wird und die Rückstellkraft immer größer wird, wird eine Mitnahme des Steuerelementes durch das Druckvergleichselement dagegen bei einem wesentlich höheren Druckunterschied zwischen Zuflußseite und Abflußseite erreicht, z.B. bei den in Deutschland hierfür vorgeschriebenen 0,5 bar.

Um hierbei eine möglichst weiche Druckfeder wählen zu können, wodurch es auch leichter ist, die Schaltzeitpunkte bei 0,1 bis 0,2 bar einerseits und 0,5 bar andererseits festzulegen, wird vorteilhafterweise das Verhältnis zwischen dem Leerhubweg des Druckvergleichselementes und dem Hubweg des Steuerelementes im Bereich zwischen 2 : 1 und 3 : 1 festgelegt.

Aus Gründen einer kostengünstigen Fertigung und zur Verhinderung von Kalkablagerungen bestehen vorzugsweise das Steuerelement und der das Steuerelement aufnehmende Gehäuseteil aus Kunststoff. Weist das Druckvergleichselement Rollmembranen auf, so bestehen zweckmäßigerweise der Gehäuseteil zwischen den Rollmembranen sowie ein die Rollmembranen im Abstand voneinander haltendes Distanzstück ebenfalls aus Kunststoff.

Das erfindungsgemäße Vorsteuerventil kann zur Steuerung verschiedener Rohrtrenner Anwendung finden. Bei einem Rohrtrenner, der mit Hilfe eines dem Rohrtrenner vorgeschalteten, eine Antriebskammer aufweisenden Absperrventils gesteuert wird, ist das Vorsteuerventil nicht dem Rohrtrenner direkt, sondern der Antriebskammer des Absperrventils zugeordnet, wobei die zuflußseitige Druckkammer des Vorsteuerventils mit der Zuflußseite des Absperrventils verbunden ist. Bei einem Rohrtrenner mit einer außerhalb des Durchflußweges des Mediums angeordneten Antriebskammer dagegen ist das Vorsteuerventil der Antiebskammer des Rohrtrenners direkt zugeordnet. In diesem Fall zweckmäßigerweise das Vorsteuerventil von einem den Rohrtrenner mit einem diesem nachgeschalteten Rückflußverhinderer verbundenen Rohrstück getragen.

Das erfindungsgemäße Vorsteuerventil ist einfach im Aufbau, kann unabhängig von der Nenngröße der den Rohrtrenner aufnehmenden Leitung und der gegebenen Druckverhältnisse Anwendung finden und ermöglicht auch bei geringen Entnahmemengen stabile Betriebsverhältnisse. Bei Kleinstentnahmemengen kann durch Bereitstellung einer Mediumreserve im Vorsteuerventil trotz Umschaltens des Rohrtrenners eine kontinuierliche Entnahme des Mediums durch den Verbraucher erreicht werden.

Nachstehend werden anhand von Zeichnungen mehrere Ausführungsbeispiele erläutert. Es zeigen:

Fig. 1 im Querschnitt einen die Schließstellung einnehmenden Rohrtrenner mit einer außerhalb des Durchflußweges angeordneten Antriebskammer und einem dieser Antriebskammer zugeordneten Vorsteuerventil;

Fig. 2 im Querschnitt das Vorsteuerventil in der in Fig. 1 gezeigten Stellung;

Fig. 3 im Querschnitt die in Fig. 1 gezeigte Vorrichtung bei einem die Durchflußstellung einnehmenden Rohrtrenner;

Fig. 4 im Querschnitt das Vorsteuerventil in der in Fig. 3 gezeigten Stellung;

Fig. 5 im Querschnitt eine abgewandelte Ausbildung eines Vorsteuerventils in der der Schließstellung des Rohrtrenners entsprechenden Position; und

Fig. 6 in schematischer Darstellung ein Vorsteuerventil in Verbindung mit einem Absperrventil für einen diesem Absperrventil folgenden Rohrtrenner.

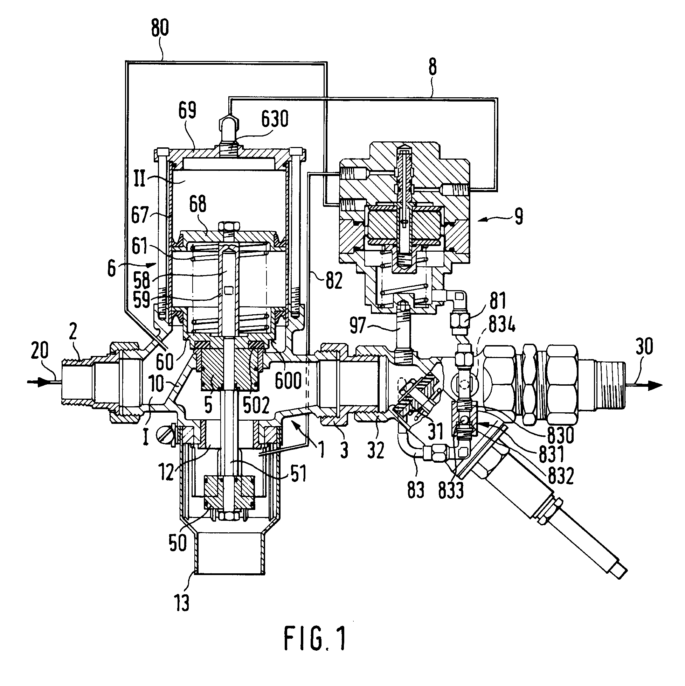

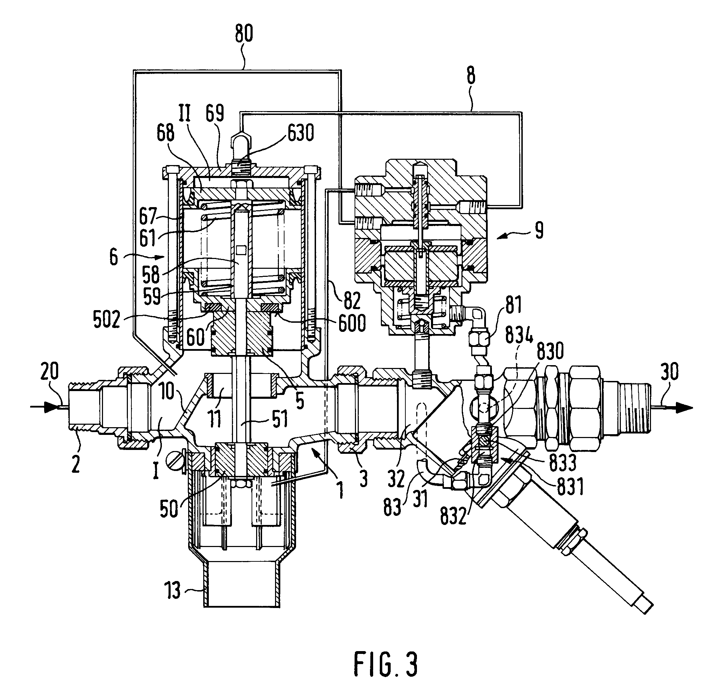

Der Rohrtrenner nach den Fig. 1 und 3 besitzt ein Gehäuse 1, das in einem Rohrleitungsstrang angeordnet ist, der aus einer Zuflußleitung 20 und einer Abflußleitung 30 gebildet ist. Zu diesem Zweck besitzt das Gehäuse 1 einen Zuflußstutzen 2 zum Anschluß an die Zuflußleitung 20, einen Abflußstutzen 3 zum Anschluß an die Abflußleitung 30 unter Zwischenschaltung eines Rückflußverhinderers 31 sowie eine Belüftungsöffnung 12. Der Zuflußstutzen 2 ist durch eine Zwischenwand 10 mit einer verschließbaren Durchflußöffnung 11 (Fig. 3) vom Abflußstutzen 3 und der Belüftungsöffnung 12 getrennt. Die Belüftungsöffnung 12 ist ferner an einen Trichter 13 angeschlossen, der über einer nicht gezeigten Leckwasserleitung endet.

Ein Verschlußelement 5 sperrt die Durchflußöffnung 11 für den Durchfluß des Mediums ab oder gibt sie frei. Ebenso ist für die Belüftungsöffnung 12 ein Verschlußelement 50 vorgessehen, um die Belüftungsöffnung 12 wechselweise zu öffnen oder zu schließen.

Die Verschlußelemente 5 und 50 sind über einen Schaft 51 starr so miteinander verbunden, daß nach Umschalten des Rohrtrenners von der einen Betriebsstellung in die andere stets eine der beiden Öffnungen 11 bzw. 12 geschlossen ist, daß jedoch in einer Zwischenstellung für einen Moment beide Öffnungen 11 und 12 geschlossen sind. Zu diesem Zweck ist der Abstand dre Verschlußorgane 5 und 50 voneinander größer als der Abstand der Durchflußöffnung 11 und der Belüftungsöffnung 12.

Auf das Gehäuse 1 ist eine Antriebseinheit 6 aufgesetzt, die aus einem Antriebszylinder 67 mit zwei Antriebskolben 60 und 68 besteht, der durch einen Deckel oder Boden 69 verschlossen ist. Der erste Antriebskolben 60 ist auf dem Schaft 51 befestigt, der die Verschlußelemente 5 und 50 verbindet, und ist in üblicher Weise gegenüber der Innenwand des Antriebszylinders 67 abgedichtet. Die Antriebsfläche 600 des Kolbens 60 ist von dem zu steuernden, sich im Gehäuse 1 auf der Zuflußseite befindenden Medium beaufschlagt. Die Zuflußseite bildet somit für den Kolben 60 gleichzeitig eine erste Antriebskammer I. Eine Rückstellfeder 61 stützt sich auf der Innenseite des Kolbens 60 ab und drückt mit ihrem Ende gegen die Innenseite des zweiten Antriebskolbens 68, der mit seiner der Rückstellfeder 61 abgewandten Seite eine zweite Antriebskammer II begrenzt.

Der zweite Antriebskolben 68 ist mit einer Hülse 59 verbunden, in die sich ein Fortsatz 58 des Schaftes 51 erstreckt. auf welchem die Hülse 59 gleitet. Auf diese Weise können sich die beiden Kolben 60 und 68 axial relativ zueinander bewegen. Die Rückstellfeder 61 ist somit zwischen den beiden Kolben 60 und 68 in einem von dem zu steuernden Medium freien Raum angeordnet.

Der Rohrtrenner 1 wird mit Hilfe eines Vorsteuerventils 9 gesteuert, mit welchem die Antriebskammer II über eine Mediumzuführöffnung 630 und eine Leitung 8 mit einem Vorsteuerventil 9 in Verbindung steht.

Das Vorsteuerventil 9 besitzt ein Gehäuse 90 mit zwei Druckkammern 91 und 92. Wie später auch näher erläutert wird, steht die Druckkammer 90 über eine Leitung 80 mit der Zuflußseite des Rohrtrenners 1 (Zuflußleitung 20) in Verbindung (siehe Einmündung der Leitung 80 in die mit der Zuflußleitung 20 in steter Verbindung stehende Antriebskammer I), während die Druckkammer 91 über eine Leitung 81 in der Abflußseite des Rohrtrenners 1 (Abflußleitung 30) in Verbindung steht.

Zwischen den Druckkammern 91 und 92 ist ein Druckvergleichselement 93 angeordnet, das in Abhängigkeit von der Druckdifferenz zwischen Zuflußseite (Zuflußleitung 20) und Abflußseite (Abflußleitung 30) des Rohrtrenners 1 in Richtung zur einen oder anderen Druckkammer 91 bzw. 92 verschiebbar ist.

Das Druckvergleichselement 93 besitzt zwei gleich große Rollmembranen 930 und 931, die durch ein Distanzstück 932 in Abstand zueinander gehalten werden und einen Zwischenraum 941 zwischen sich einschließen. Die beiden Rollmembranen 930 und 931 sind mit Hilfe einer Gewindebüchse 933 und einer Kopfmutter 934 zwischen dem Distanzstück 932 und einem Membranteller 935 bzw. 936 eingespannt. Die äußeren Ränder der Rollmembranen 930 und 931 werden durch ein Gehäuseteil 94 im Abstand voneinander gehalten und sind zwischen diesem Gehäuseteil 94 und einem weiteren Gehäuseteil 95 bzw. 96 eingespannt.

Der Zwischenraum 941 zwischen den Rollmembranen 930 und 931 sowie dem Gehäuseteil 94 und dem Distanzstück 932 steht über eine im Gehäuseteil 94 vorgesehene Belüftungsbohrung 940 mit der Atmosphäre in Verbindung.

Das Vorsteuerventil 9 kann in beliebiger Weise gegenüber dem Rohrtrenner 1 angeordnet sein. Je nach Platzverhältnissen kann es sich somit beispielsweise auch über der Antriebseinheit 6 des Rohrtrenners 1 befinden. Gemäß dem in den Fig. 1 und 3 gezeigten Ausführungsbeispiel wird das Vorsteuerventil 9 mit seinem Gehäuseteil 96 mit Hilfe einer geeigneten Halterung 97 von einem Rohrstück 32 getragen, welches den Rohrtrenner 1 mit einem dem Rohrtrenner 1 nachgeschalteten Rückflußverhinderer 31 verbindet. Gemäß den Fig. 1 und 3 bildet dieses Rohrstück 32 gleichzeitig das den Rückflußverhinderer 31 aufnehmende Gehäuse.

Vom Rohrstück 32 zwischen Rohrtrenner 1 und Rückflußverhinderer 31 zweigt eine Bypass-Leitung 83 ab, welche gemäß dem in den Fig. 1 und 3 gezeigten Ausführungsbeispiel einen vertikalen Leitungsabschnitt 830 mit einem Rückflußverhinderer 831 besitzt, der eine durch den Druck des fließenden Mediums von einem Sitz 832 abhebbare Kugel 833 aufweist. Dieser vertikale Leitungsabschnitt 830 geht in einen horizontalen Leitungsabschnitt 834 über, der in Durchflußrichtung hinter dem Rückflußverhinderer 31 in die Abflußleitung 30 mündet.

Zwischen den Leitungsabschnitten 830 und 834 mündet die Leitung 81 in die Bypass-Leitung 83, so daß die Druckkammern 92 über die Leitung 81 und den Leitungsabschnitt 834 der Bypass-Leitung 83 mit der Abflußleitung 30 verbunden ist.

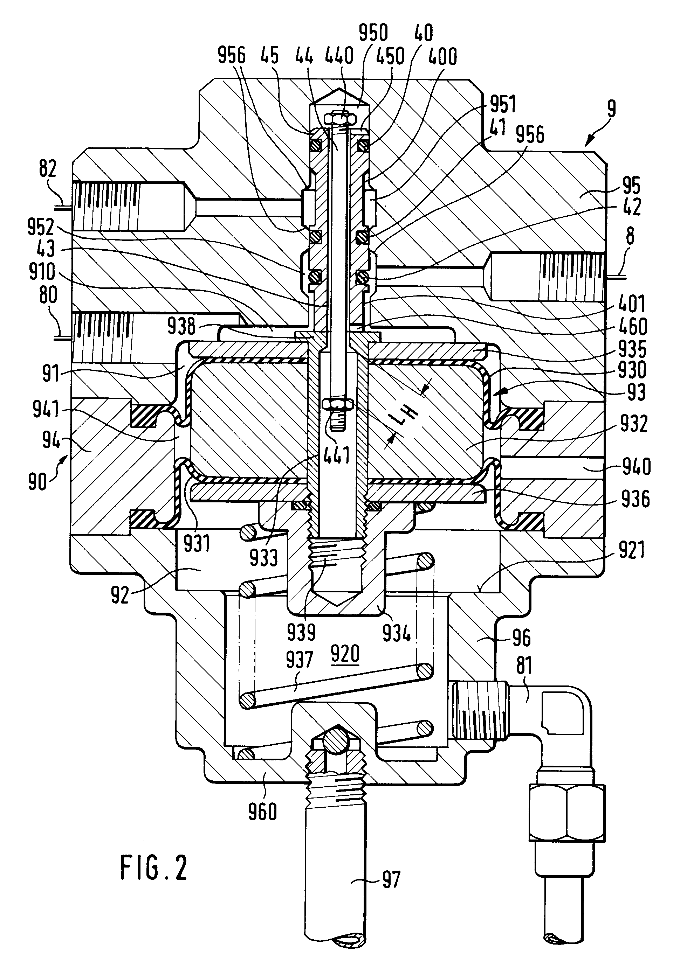

Die Druckkammer 92 setzt sich auf ihrer dem Druckvergleichselement 93 abgewandten Seite in Form einer im Durchmesser reduzierten Teilkammer 920 fort, die auf diese Weise von einer Ringschulter 921 (Fig. 2) für den Membranteller 936 umgeben ist. Innerhalb der Druckkammer 92 befindet sich eine Druckfeder 937. Sie stützt sich auf ihrer dem Druckvergleichselement 93 abgewandten Seite an einer Stirnwand 960 des Gehäuseteiles 96 ab, während sich das andere Ende der Druckfeder 937 am Membranteil 936 abstützt. Diese Druckfeder 937 bildet ein Sicherheitselement, wie später noch näher erläutert wird, und beaufschlagt das Druckvergleichselement 93 in der gleichen Richtung wie das in der Druckkammer 92 befindliche Medium.

Das Gehäuseteil 95 besitzt zur Aufnahme eines kolbenförmigen Steuerelementes 4 in Flucht mit der vom Druckvergleichselement 93 getragenen Gewindebüchse 933 eine Bohrung 950, die an ihrem dem Druckvergleichselement 93 abgewandten Ende geschlossen ist. Die Bohrung 950 besitzt zwei im Abstand zueinander angeordnete Ringnuten 951 und 952, von denen die in größerer Entfernung zur Druckkammer 91 befindliche Ringnut 951 mit einer Entleerleitung 82 in Verbindung steht, die ihrerseits im Trichter 13 endet (Fig. 1 und 3). Die andere Ringnut 952 steht dagegen über die Leitung 8 mit der Antriebskammer II des Rohrtrenners 1 in Verbindung.

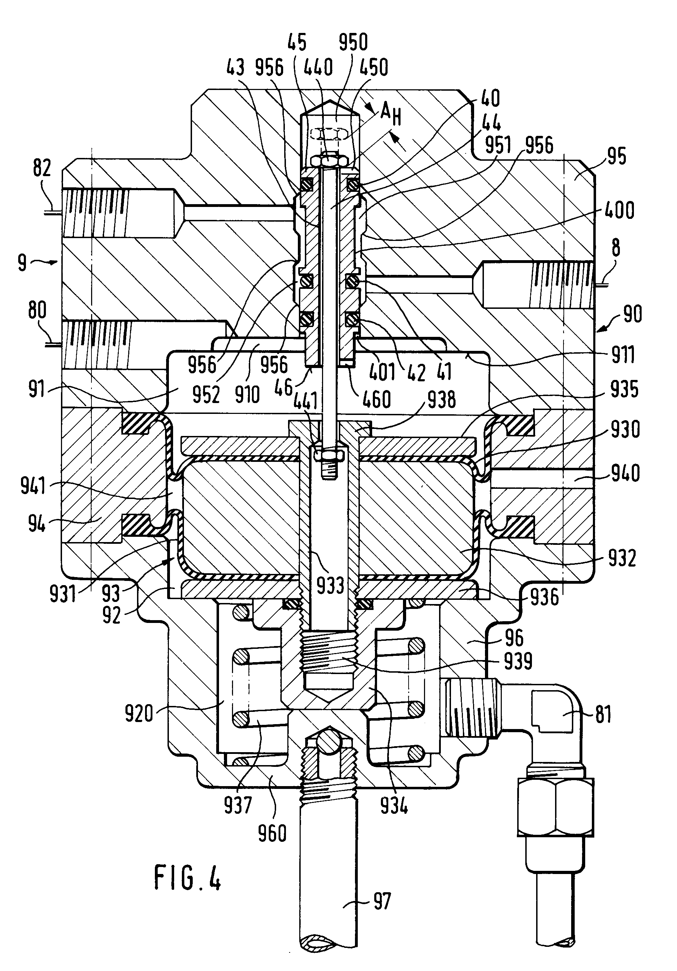

Die zuflußseitige Druckkammer 91 befindet sich zwischen dem Druckvergleichselement 93 und dem Steuerelement 4 und besitzt auf ihrer der Bohrung 950 zugewandten Seite eine Teilkammer 910 mit reduziertem Durchmesser, die auf diese Weise von einer Ringschulter 911 (Fig. 4) als Anschlag für den Membranteller 935 umgeben ist. In diese Teilkammer 910 mündet die erwähnte Leitung 80 ein, die mit der Zuflußleitung 20 in Verbindung steht.

Das Steuerelement 4 ist längsverschiebbar in der Bohrung 950 des Gehäuseteils 95 angeordnet und trägt drei Ringdichtungen 40, 41 und 42. Diese Ringdichtungen 40, 41 und 42 sind relativ zur Teilkammer 910 und den Ringnuten 951 und 952 so angeordnet, daß in der in Fig. 2 gezeigten Stellung des Steuerelementes 4 die Ringdichtung 41 den Zwischenraum zwischen den Ringnuten 951 und 952 abdichtet, während die Ringdichtung 42 die Verbindung zwischen der Ringnut 951 und der Teilkammer 910 freigibt, und daß in der in Fig. 4 gezeigten Stellung des Steuerelementes 4 die Ringdichtung 42 den Zwischenraum zwischen der Ringnut 952 und der Teilkammer 910 abdichtet, während die Ringdichtung 41 die Verbindung zwischen den Ringnuten 951 und 952 freigibt. Die Ringdichtung 40 dichtet in jeder Stellung des Steuerelementes 4 die Bohrung 950 zwischen ihrem der Druckkammer 91 abgewandten Ende und der Ringnut 951 ab.

Um eine hohe Lebensdauer der Ringdichtungen 40, 41 und 42 zu gewährleisten, ist gemäß der gezeigten Ausführung vorgesehen, daß die Ringnuten 951 und 952, in welche die Entleerleitung 82 bzw. die zur Antriebskammer II führende Leitung 8 einmünden, seitliche Anfasungen 956 aufweisen.

Damit die Verbindung zwischen der Ringnut 952 und der Ringnut 951 bzw. der Druckkammer 91 hergestellt werden kann, besitzt das Steuerelement 4 in seiner Mantelfläche Umfangsnuten 400 bzw. 401.

Die Druckkammer 91 steht über die Leitung 80 mit der Zuflußleitung 20 in Verbindung, während die Ringnut 952 über die Leitung 8 mit der Antriebskammer II des Rohrtrenners in Verbindung steht und die Ringnut 951 mit der Entleerleitung 82 in Verbindung steht. Durch Verschieben des Steuerelementes 4 wird somit die Antriebskammer II wahlweise mit der Zuflußleitung 20 oder die Entleerleitung 82 verbunden.

Das Steuerelement 4 besitzt eine Axialbohrung 43, welche zur Erzielung eines Druckausgleiches zwischen den beiden Stirnseiten des Steuerelementes 4 von der der Druckkammer 91 abgewandten Seite bis zur Druckkammer 91 reicht. Durch diese Axialbohrung 43 hindurch erstreckt sich mit radialem Spiel eine Kolbenstange 44. Diese trägt an ihren beiden Enden in festgelegtem Abstand zueinander zwei Anschläge 440 und 441.

Der Anschlag 440 arbeitet mit dem der Druckkammer 91 abgewandten Ende des Steuerelementes 4 zusammen, welches somit ebenfalls einen Anschlag 45 bildet.

Die Kolbenstange 44 ragt mit ihrem Anschlag 441 bis in eine Gewindebüchse 933 hinein, welche in einer Bohrung 939 des Druckvergleichselementes 93 angeordnet ist. Diese Bohrung 939 ist an ihrem dem Steuerelement 4 abgewandten Ende gegenüber der Druckkammer 92 geschlossen. Die Gewindebüchse 933 ist aus Montagegründen an ihrem dem Kopfende der Bohrung 939 zugewandten Ende offen und trägt an ihrem dem Steuerelement 4 zugewandten Ende einen Anschlagring 938.

Die dem Steuerelement 4 zugewandte Seite des Anschlagringes 938 bildet einen Anschlag des Druckvergleichselementes 93, welcher mit dem dem Druckvergleichselement 93 zugewandten Ende des Steuerelementes 4 zusammenarbeitet, das somit ebenfalls einen Anschlag 46 (Fig. 4) bildet. Die dem Steuerelement 4 abgewandte Seite des Anschlagringes 938 bildet einen weiteren Anschlag des Druckvergleichselementes 93, welcher mit dem Anschlag 441 auf der Kolbenstange 44 zusammenarbeitet.

Sowohl zwischen dem Anschlag 441 und der Gewindebüchse 933 als auch zwischen der Kolbenstange 44 und dem Anschlagring 938, durch welchen hindurch die Kolbenstange 44 geführt ist, ist ein radiales Spiel vorgesehen, so daß ein Druckausgleich zwischen dem Inneren der Bohrung 939 und der Druckkammer 91 erfolgt.

Die Anschläge 440 und 441 einerseits und der Anschlag 45 und die dem Anschlag 441 zugewandte Anschlagfläche des Anschlagringes 938 sind dabei so zueinander angeordnet, daß das Druckvergleichselement 93 Relativbewegungen gegenüber dem Steuerelement 4 ausführen kann. Die Größe dieses Leerhubweges $L_H$ wird dabei so festgelegt, daß eine Mitnahme des Steuerelementes 4 erst erfolgt, wenn sich das Druckverhältnis zwischen Zuflußseite und Abflußseite des Rohrtrenners 1 in vorbestimmter Weise geändert hat. Ein entsprechender Leerhubweg $L_H$ ergibt sich auf diese Weise auch zwischen dem Anschlag 46 und der dem Steuerelement 4 zugewandten Anschlagfläche des Anschlagringes 936.

Der Anschlagring 936 befindet sich mit axialem Spiel zwischen dem durch das Stirnende des Steuerelementes 4 gebildeten Anschlag 46 sowie dem Anschlag 441, der über die Kolbenstange 44 mit dem Steuerelement 4 gekoppelt wird. Somit ist auch dieser Anschlag 441 über die Kolbenstange 44 und die Anschläge 440 und 45 dem Steuerelement 4 zugeordnet.

Solange der Abflußleitung 30 kein Wasser oder anderes Medium entnommen wird, befindet sich der Rohrtrenner 1 in der in Fig. 1 gezeigten Stellung. Das Vorsteuerventil 9 nimmt dabei die in den Fig. 1 und 2 gezeigte Stellung ein. Hierbei verbindet das Vorsteuerventil 9 über die Leitungen 80 und 8 die Antriebskammer II mit der Zuflußleitung 20. Von der der Antriebskammer I zugewandten Stirnfläche des Antriebskolbens 60 ist nur die äußere Ringfläche 600 dem zuflußseitigen Mediumdruck ausgesetzt und somit für den Antrieb wirksam. Der innere Teil ist durch einen auf den Ventilsitz 110 aufgesetzten Ventilkegel 502 abgedeckt.

Die der Antriebskammer II zugewandte Stirnseite des zweiten Antriebskolbens 68 ist dagegen völlig dem in der Antriebskammer II befindlichen Mediumdruck ausgesetzt. In der Antriebskammer II und in der Antriebskammer I im Gehäuse 1 herrscht in gleich hoher Druck, da beide Kammern mit der Zuflußleitung 20 (siehe Fig. 1) in Verbindung stehen. Aufgrund der größeren wirksamen Fläche des zweiten Antriebskolbens 68 drückt der zweite Kolben 68 die Rückstellfeder 61 so weit zusammen, daß die Hülse 59 auf dem Kolben 60 aufsitzt und damit das Verschlußelement 5 in der Durchflußöffnung 11 hält. Der am Kolben 60 befindliche Ventilkegel 502 wird auf den Ventilsitz 110 gedrückt. Die Durchflußöffnung 11 ist geschlossen, während die Belüftungsöffnung 12 freigegeben ist. Der Rohrtrenner befindet sich jetzt in Belüftungs- bzw. Trennstellung und wird durch den Mediumdruck zwangsläufig in dieser Stellung gehalten (Fig. 1). Hierdurch befinden sich auch die Rückflußverhinderer 31 und 831 in den gezeigten Schließstellungen.

Sobald Medium aus der Abflußleitung 30 entnommen wird, sinkt der Druck in der Abflußleitung 30 und gleichzeitig auch in der hiermit verbundenen Druckkammer 92. Der Druck in der Zuflußleitung 20 und somit auch in der Druckkammer 91 übersteigt deshalb den in der Druckkammer 92 herrschenden Druck, doch wird das Druckvergleichselement 93 durch die Druckfeder 937 zunächst an einer Verschiebung im Gehäuse 90 gehindert. Erst wenn bei weiterer Entnahme des Mediums aus der Abflußleitung 30 die Druckdifferenz der in den Druckkammern 91 und 92 herrschenden Drücke den durch die Federkraft gebildeten Sicherheitswert übersteigt, beginnt das Druckvergleichselement 93, sich in Richtung zur Druckkammer 92 zu bewegen. Dabei wird die Druckfeder 937 gespannt, so daß die Rückstellkraft immer größer wird.

Bei der weiteren Entnahme des Mediums aus der Abflußleitung 30 gelangt das Druckvergleichselement 93 mit seinem Anschlagring 938 zur Anlage an den Anschlag 441 der Kolbenstange 44.

Der Leerhubweg $L_H$ des Druckvergleichselementes 93, d.h. der Beginn der Bewegung des Druckvergleichselementes 93 bis zum Auflaufen des Anschlagringes 938 auf den Anschlag 441 der Kolbenstange, und die Federkonstante der Druckfeder 937 sind so aufeinander abgestimmt, daß das Druckvergleichselement bei seiner Bewegung in Richtung zur Druckkammer 92 erst bei Erreichen eines vorgegebenen Druckunterschiedes auf das Steuerelement 4 aufläuft. Dieser vorgegebene Druckunterschied wird z.B. in Deutschland nach den geltenden Bestimmungen auf 0,5 bar festgelegt.

Die Kolbenstange 44 liegt mit ihrem anderen Anschlag 440 am Anschlag 45 an dem der Druckkammer 91 abgewandten Ende des Steuerelementes 4 an, so daß bei der weiteren Bewegung des Druckvergleichselementes 93 dieses das Steuerelement 4 mitnimmt, bis der Membranteller 93 schließlich zur Anlage an die Ringschulter 921 gelangt (Fig. 3 und 4).

Bei seiner Bewegung sperrt das Steuerelement 4 mit seiner Ringdichtung 42 die Verbindung zwischen der Druckkammer 91 (Teilkammer 910) und der Ringnut 952 und damit die Verbindung zwischen der Zuflußleitung 20 und der Antriebskammer II und gibt die Verbindung frei zwischen den Ringnuten 951 und 952 und auf diese Weise zwischen der Antriebskammer II und der Entleerleitung 82. Dadurch sinkt der Druck in der Antriebskammer II. Durch den in der Antriebskammer I weiterhin konstanten Mediumdruck werden die beiden Antriebskolben 60 und 68 samt der zwischen ihnen befindlichen Rückstellfeder 61 in Richtung zur Antriebskammer II verschoben. Das auf dem Schaft 51 befestigte Verschlußelement 5 wird mit dem Antriebskolben 60 bewegt und damit die Durchflußöffnung 11 freigegeben. Kurz vor Freigabe der Durchflußöffnung 11 sperrt das Verschlußelement 50 die Belüftungsöffnung 12, so daß das Medium nur durch die Abflußleitung 30 fließen kann (Fig. 3). Hierdurch werden die Rückflußverhinderer 31 und 831 geöffnet.

In dieser Durchflußstellung drückt der erste Antriebskolben 60 den zweiten Antriebskolben 68 gegen den Deckel 69 und die Rückstellfeder 61 so weit zusammen, daß sich der Kolben 60 auf der Hülse 59 abstützt. Auch hier wird der Rohrtrenner durch den Mediumdruck zwangsläufig in dieser Stellung gehalten.

Wird das Ventil in der Abflußleitung 30 geschlossen, so steigt der abflußseitige Druck. Über den Leitungsabschnitt 834 der Bypass-Leitung 83 und die Leitung 81 baut sich auch in der Druckkammer 92 zunehmend ein höherer Druck auf. Erreicht der in der Druckkammer 92 herrschende Druck einen bestimmten Wert im Vergleich zu dem in der Druckkammer 91 herrschenden Druck, so beginnt mit Unterstützung durch die sich nun wieder entspannende Druckfeder 937 das Druckvergleichselement 93 jetzt, sich in Richtung zur Druckkammer 91 zu bewegen. Der Anschlagring 938 löst sich dabei vom Anschlag 441 und nähert sich dem Steuerelement 4 und läuft schließlich auf das der Druckkammer 91 zugewandte Ende des Steuerelementes 4 auf.

Der Leerhub $L_H$ des Druckvergleichselementes Federkonstante der Druckfeder 937 sind dabei so aufeinander abgestimmt, daß das Druckvergleichselement bei seiner Bewegung in Richtung zum Steuerelement 4 erst bei Erreichen eines Druckunterschiedes zwischen Zuflußseite und Abflußseite im Bereich von 0,1 bis 0,2 bar auf das Steuerelement 4 aufläuft und beginnt, dieses anzutreiben.

Je größer der Leerhubweg $L_H$ im Verhältnis zum Hubweg $A_H$ des Steuerelementes 4 gewählt wird, eine desto weichere Druckfeder 937 kann gewählt werden. Je weicher aber die Druckfeder 937 ist, desto besser lassen sich die Sicherheitswerte für das Freigeben des Rohrtrenners 1 bzw. für sein erneutes Schließen festlegen. Es hat sich gezeigt, daß dieser Zweck sich besonders gut erreichen läßt, wenn das Verhältnis $L_H : A_H$ im Bereich zwischen 2 : 1 und 3 : 1 liegt. Beispielsweise beträgt der Leerhubweg $L_H$ 10 mm, während der Hubweg $A_H$ des Steuerelementes 4 nur 5 mm beträgt. Bei Hubwegunterschieden unter 2 : 1 benötigt man eine härtere Feder, was aus den obigen Gründen nicht gewünscht wird, während bei Hubwegunterschieden oberhalb von 3 : 1 die Feder zu groß ist, was zu einer übermäßigen Vergrößerung des Gehäuses 90 führt.

Das Steuerelement 4 wird nun aus seiner in Fig. 4 gezeigten Position in die in Fig. 2 gezeigte Stellung zurückgebracht. Dabei wird die Verbindung zwischen der Antriebskammer II und der Entleerleitung 82 unterbrochen und statt dessen die Verbindung zwischen der Zuflußleitung 20 und der Antriebskammer II wiederhergestellt.

Aufgrund der unterschiedlich großen Wirkflächen der beiden Antriebskolben 60 und 68 drückt der Antriebskolben 68 die Rückstellfeder 61 zusammen mit dem Kolben 60 wieder zurück in die in Fig. 1 gezeigte Position. Der Rohrtrenner ist wieder in seiner Trenn- bzw. Belüftungsstellung.

Fällt der Druck auf der Zuflußseite des Rohrtrenners ab, so nimmt der Rohrtrenner unabhängig von der Stellung des Ventiles 85 seine Trenn- und Belüftungsstellung ein. In diesem Fall wird die Rückstellfeder 61 wirkam und drückt den Antriebskolben 60 gegen den in der Antriebskammer I nachlassenden Mediumdruck und damit den Ventilkegel 502 gegen den Ventilsatz 110 in die Trenn- und Belüftungsstellung.

Wenn gleichzeitig auch in der zweiten Antriebskammer II der Mediumdruck abgefallen ist, behält der zweite Antriebskolben 68 seine in Fig. 3 gezeigte Stellung, während der Antriebskolben 60 sowie die Verschlußelemente 5 und 50 die in Fig. 1 gezeigte Stellung einnehmen. Fällt der zuflußseitige Druck bei geschlossener Durchflußöffnung (Fig. 1), so drückt die Rückstellfeder 61 den zweiten Antriebskolben 68 lediglich gegen den weichenden Mediumdruck in der Antriebskammer II in die in Fig. 2 gezeigte Stellung.

Der Rückflußverhinderer 831 in der Bypass-Leitung 83 hat die Aufgabe zu verhindern, daß bei geringen Entnahmemengen nach Freigabe des Durchflusses durch den Rohrtrenner 1 sofort in der Druckkammer 92 ein derartiger Druckanstieg auftritt, daß das Druckvergleichselement 93 wieder eine Verstellung des Steuerelementes 4 bewirkt.

Die in bezug auf den Rohrtrenner 1 abflußseitigen Druckschwankungen werden somit infolge des geringen Querschnitts der Bypass-Leitung 83 und der Leitung 81 so gedämpft, daß das Druckvergleichselement 93 nicht schlagartig bewegt wird. Bleibt der Druckunterschied zwischen Zuflußseite und Abflußseite (bezogen auf den Rohrtrenner 1) oberhalb der festgelegten Grenze (z.B. 0,1 bis 0,2 bar für das Zurückführen des Rohrtrenners 1 in seine Schließstellung), so gelangt das Druckvergleichselement 93 bei seiner Bewegung nicht zur Anlage an das Steuerelement 4, so daß der Rohrtrenner 1 in seiner Durchflußstellung verbleibt.

Wie bereits erwähnt, ist die Kolbenstange 44 mit radialem Spiel durch die Axialbohrung 43 des Steuerelementes 4 geführt. Hierdurch wird der Kolbenstange 44 eine Radialbewegung ermöglicht, so daß bei nicht exakt übereinstimmender Bewegungsrichtung von Druckvergleichselement 93 und Steuerelement 4 keine nachteiligen Auswirkungen hieraus erwachsen. Demselben Ziel dient auch das radiale Spiel zwischen der Kolbenstange 44 und dem Anschlagring 938 und zwischen der Gewindebüchse 933 und dem Anschlag 441. Darüber hinaus ermöglicht dieses radiale Spiel einen Flüssigkeitsaustausch und damit einen Druckausgleich zwischen Druckkammer 91 und den der Druckkammer 91 abgewandten Enden der Bohrungen 950 bzw. 939.

Damit solch ein Druckausgleich auch möglich ist nach Auflauf des Anschlagringes 938 auf den Anschlag 46 bzw. nach Auflauf des Anschlages 440 auf den Anschlag 45, weist gemäß der in den Fig. 2 und 4 gezeigten Ausführung das Steuerelement 4 an seinen beiden Enden (Anschläge 45 und 46) jeweils mindestens eine radiale Nut 450 bzw. 460 auf, die von der Bohrung 950 bis nach außen reicht. Natürlich ist es auch denkbar, derartige Nuten nicht am Steuerelement 4, sondern in den mit dem Steuerelement 4 zusammenarbeitenden Anschlägen, d.h. im Anschlag 440 bzw. im Anschlagring 938 vorzusehen.

Das Vorsteuerventil 9 kann in vielfältiger Weise abgewandelt werden, insbesondere durch Austausch einzelner Merkmale untereinander oder gegen Äquivalente oder durch andere Kombinationen hiervon. So ist z.B. eine Druckfeder 937 als Sicherheitselement, das die abflußseitig auf das Druckvergleichselement 93 einwirkende Kraft erhöht, besonders vorteilhaft, da diese einen unabhängig von den Druckverhältnissen stets gleichen Sicherheitswert festlegt, doch kann dieses Sicherheitselement für bestimmte Zwecke auch als eine zusätzliche Fläche ausgebildet sein, um welche die der abflußseitigen Druckkammer 92 ausgesetzte Stirnfläche des Druckvergleichselementes 93 größer ist als die der zuflußseitigen Druckkammer 91 ausgesetzte Stirnfläche des Druckvergleichselementes 93. Allerdings muß bei einer solchen Ausbildung des Sicherheitselementes in Kauf genommen werden, daß der Sicherheitswert in Abhängigkeit von dem gegebenen Druck in der Zuflußleitung 20 schwankt. Wenn eine Druckfeder 937 als Sicherheitselement Anwendung findet, so ist es auch nicht zwangsläufig erforderlich, daß diese sich im Gehäuse 90, insbesondere in der abflußseitigen Druckkammer 92 befindet, sondern bei entsprechender Ausbildung von Gehäuse 90 und Halterung 97 kann das Druckvergleichselement 93 auch bis außerhalb des Gehäuses 90 reichen und ihm hier die Druckfeder 937 zugeordnet sein.

Auch ist zur Führung des von der Kolbenstange 44 getragenen Anschlages 441 keine Gewindebüchse oder andere Büchse erforderlich, sondern es genügt eine Bohrung im Druckvergleichselement 4, wenn die Membranteller 935 und 936 auf andere Weise, z.B. mit Hilfe von exzentrisch angeordneten Schraubverbindungen, die Rollmembranen 930 und 931 sichern.

Auch die Bypass-Leitung 83 mit einem zusätzlichen Rückflußverhinderer 831 ist nicht in allen Fällen erforderlich, jedoch besonders zweckmäßig, wenn mit kleinen Entnahmemengen zu rechnen ist, da auch nach Schließen des Rückflußverhinderers 31 dann noch Medium durch die Bypass-Leitung 83 fließt und damit einen ungewollten Druckanstieg in der abflußseitigen Druckkammer 92 verhindert. Eine solche Vorrichtung, die je nach der den Rohrtrenner 1 durchfließenden Durchflußmenge einen Druckanstieg in der abflußseitigen Druckkammer 92 verhindert, kann ebenfalls unterschiedlich ausgebildet sein. So kann die inganggesetzte Strömung in der Bypass-Leitung zu einer Reduzierung des Druckes in der Druckkammer 92 führen, oder aber es kann durch Öffnen des Rückflußverhinderers 31 oder 831 die Druckkammer 92 von der Abflußleitung abgekoppelt werden.

Es ist auch möglich, die Kolbenstange 44 starr mit dem Steuerelement 4 zu verbinden, wobei zwecks Druckausgleichs zwischen den beiden Seiten des Steuerelementes 4 durch Flüssigkeitsaustausch eine exzentrisch angeordnete Axialbohrung anstelle der in den Fig. 2 und 4 gezeigten Axialbohrung 43 vorgesehen wird.

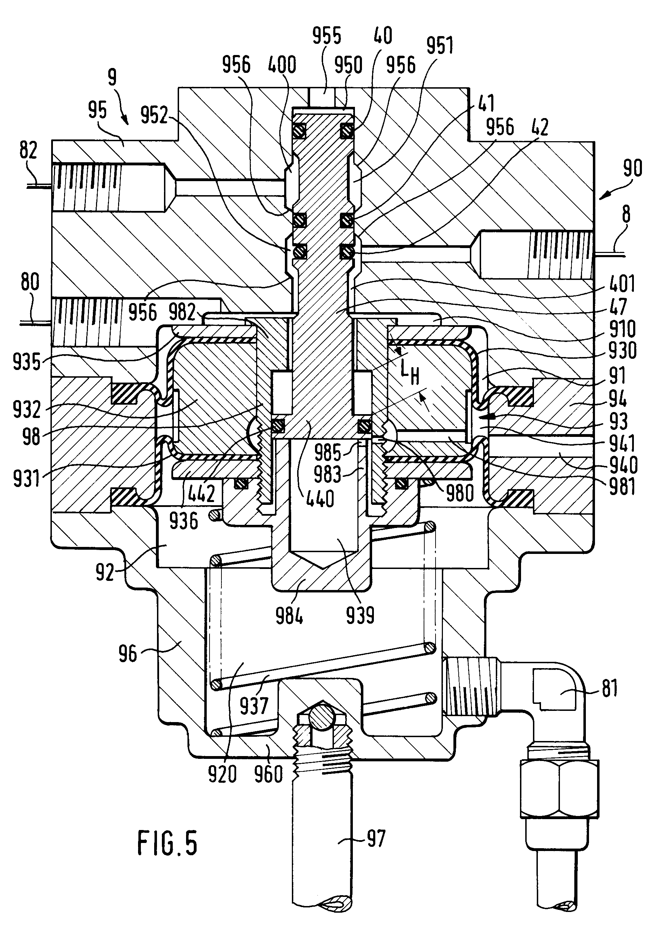

Eine andere Ausbildung eines Vorsteuerventils 9, bei welchem ein Druckausgleich zwischen den beiden Enden eines abgewandelten Steuerelementes 47 auf pneumatischem Wege erfolgt, zeigt Fig. 5. Bei dieser Ausführung ist der Anschlag 441 direkt, d.h. starr, mit dem Steuerelement 47 verbunden. Dieses besitzt einen lediglich durch die Umfangsnuten 400 und 401 unterbrochenen gleichbleibenden Durchmesser von seinem dem Druckvergleichselement 93 abgewandten Ende bis zum Anschlag 440. Der Anschlag 440 wird in einer Gewindebüchse 98 geführt und ist gegenüber dieser mittels einer Ringdichtung 442 abgedichtet. Um einen Druckausgleich zwischen Druckkammer 91 und dem der Druckkammer 91 abgewandten Ende der Bohrung 939 und der Bohrung 950 zu ermöglichen, steht das Ende der Bohrung 939 über eine Belüftungsöffnung 980 in der Gewindebüchse 98 und eine hiermit kommunizierende Belüftungsöffnung 981 im Distanzstück 932, den Zwischenraum 941 sowie über die Belüftungsöffnung 940 im Gehäuseteil 94 mit der Atmosphäre in Verbindung. Das Kopfende der Bohrung 950 ist über eine Belüftungsöffnung 955 mit der Atmosphäre verbunden.

Die Gewindebüchse 98 besitzt auch hier zwischen dem Anschlag 440 und der Druckkammer 91 einen Anschlagring 982 zur Zusammenarbeit mit dem Anschlag 440. Dieser Anschlag 440 arbeitet außer mit diesem Anschlagring 982 noch mit einem zweiten Anschlag 983 zusammen, der durch einen in die Gewindebüchse 98 hineinragenden Ansatz der Kopfmutter 984 gebildet wird, mit welcher die Gewindebüchse 98 verschraubt ist. Um einen Druckausgleich auch bei aneinander anliegenden Anschlägen 440 und 983 zu ermöglichen, besitzt der Anschlag 983 einen oder mehrere radiale Nuten 985.

Die Funktion dieses Vorsteuerventiles 9 ist dem anhand der Fig. 1 bis 4 beschriebenen Vorsteuerventil 9 sehr ähnlich. Wird aufgrund Erreichens der vorbestimmten Druckdifferenz zwischen Zuflußseite und Abflußseite des Rohrtrenners 1 das Druckvergleichselement 93 zur Freigabe des Durchflusses durch den Rohrtrenner 1 in Richtung zur Druckkammer 92 bewegt, so läuft der Anschlagring 982 nach Durchlaufen des fesgelegten Leerhubweges $L_H$ schließlichauf den Anschlag 440 des Steuerelementes 47 auf und nimmt dieses dann mit. Bei Änderung der Druckverhältnisse löst sich der Anschlagring 982 zunächst vom Anschlag 440 des Steuerelementes 47, bis nach Durchlaufen des Leerhubweges $L_H$ das Druckvergleichselement 93 mit seinem Anschlag 983 auf den Anschlag 440 des Steuerelementes 47 aufläuft. Auch hier sind wie bei der zuvor beschriebenen Ausführung zwei Anschlagpaare vorgesehen mit je einem Anschlag bzw. einer Anschlagfläche, der bzw. die dem Steuerelement 47 zugeordnet ist, und einem Anschlag bzw. einer Anschlagfläche, der bzw. die dem Druckvergleichselement 93 zugeordnet ist.

Ausgehend von der Erkenntnis, daß sich ein Schaltzeitpunkt desto besser festlegen läßt, je größer die beaufschlagten Flächen sind, ist gemäß den in den Fig. 1 bis 5 gezeigten Ausführungsbeispielen die Querschnittsfläche des Druckvergleichselementes 93 so gewählt, daß sie ein Vielfaches der Querschnittsfläche des Steuerelementes 4 bzw. 47 beträgt, dessen Querschnittsfläche wiederum im Interesse einer material- und energiesparenden Bauweise möglichst klein gewählt wird. Als besonders vorteilhaft hat sich dabei ein Verhältnis zwischen den Querschnittsflächen des Druckvergleichselementes 93 und Steuerelement 4 bzw. 47 zwischen 20 : 1 und 50 : 1 erwiesen. Beispielsweise hat das Druckvergleichselement 93 eine beaufschlagbare Fläche von 20 cm$^2$, während das Steuerelement 4 bzw. 47 eine Querschnittsfläche von 0,8 cm$^2$ besitzt.

Ein großer Wirkquerschnitt der Druckvergleichsvorrichtung 93 bietet aber noch einen weiteren wesentlichen Vorteil. Je größer dieser Wirkquerschnitt nämlich ist, desto größer ist auch die in der abflußseitigen Druckkammer 92 des Vorsteuerventils 9 gespeicherte Mediummenge.

Wenn bei kleinen und kleinsten Entnahmemengen der abflußseitige Druck im Verhältnis zum zuflußseitigen Druck ansteigt, so wird durch das sich in der Druckkammer 92 befindliche Medium und die Druckfeder 937 das Druckvergleichselement 93 in Richtung zur Druckkammer 91 bewegt, bis schließlich auch das Steuerelement 4 bzw. 47 vom Druckvergleichselement 93 in seine andere Endstellung mitgenommen wird. Die Antriebskammer II des Rohrtrenners 1 wird auf diese Weise von der Zuflußleitung 20 getrennt und mit der Entleerleitung 82 verbunden, wodurch der Rohrtrenner 1 in seine Schließstellung gebracht wird.

Bei weiterer Entnahme des Mediums aus der Abflußleitung 30 überwiegt allmählich der Druck in der Druckkammer 91 wieder und das Druckvergleichselement 93 wird in Richtung zur Druckkammer 92 bewegt. Dabei wird das sich in dieser Druckkammer 92 befindende Medium durch die Leitung 81 in die Abflußleitung 30 gedrückt und kann aus dieser ebenfalls entnommen werden.

Während dieser Bewegung des Druckvergleichselementes 93 provoziert dieses schließlich bei einer Druckdifferenz von 0,5 bar zwischen Zuflußseite (Zuflußleitung 20) und Abflußseite (Abflußleitung 30) eine Mitnahme des Steuerelementes 4 bzw. 47, das nun die Verbindung zwischen Antriebskammer II des Rohrtrenners 1 und Entleerleitung 82 zugunsten einer Verbindung zwischen Zuflußleitung 20 und Antriebskammer II unterbricht. Der Rohrtrenner 1 gelangt nun in seine Durchflußstellung. Solange sich in der Abflußleitung 30 noch kein höherer Druck aufbauen kann, kann aus der Druckkammer 92 noch Medium in die Abflußleitung 30 gelangen, so daß bei kleinen und kleinsten Entnahmemengen eine gleichförmige Entnahme ermöglicht wird. Dies ist beispielsweise bei den Schliefturbinen für Zahnärzte von besonderer Bedeutung.

Bei der geringen Entnahme baut sich in der Abflußleitung allmählich wieder ein höherer Druck auf, der sich über die Druckkammer 92 auch auf das Druckvergleichselement 93 auswirkt. Wie zuvor beschrieben, ist das Vorsteuerventil 9 jedoch so konzipiert, daß das Steuerelement 4 bzw. 47 erst bei Erreichen eines Druckunterschiedes im Bereich zwischen 0,1 und 0,2 bar zwischen Zuflußseite und Abflußseite in seine andere Schaltstellung gebracht wird. Bis zu diesem Zeitpunkt ist eine Entnahme aus der Abflußleitung 30 ohne besondere Zwischenspeicherung, d.h. außer im Vorsteuerventil 9, möglich. Sodann wiederholt sich der oben geschilderte Vorgang.

Im Interesse einer kostengünstigen Fertigung bestehen gemäß Fig. 5 das Steuerelement 47, das das Steuerelement 47 aufnehmende Gehäuseteil 95, das Gehäuseteil 94 zwischen den Rollmembranen 930 und 931 sowie das Distanzstück 932, welches Teil des Druckvergleichselementes 93 ist, aus Kunststoff. Hierdurch wird außerdem eine geringe Kalkablagerung erreicht. Lediglich das Gehäuseteil 96, das der Halterung des Gehäuses 90 dient, ist bei dem gezeigten Ausführungsbeispiel aus Metall gefertigt.

Wenn das Druckvergleichselement 93 statt Rollmembranen 930 und 931 einen Stellkolben aufweist, so gilt das Obengesagte in analoger Weise.

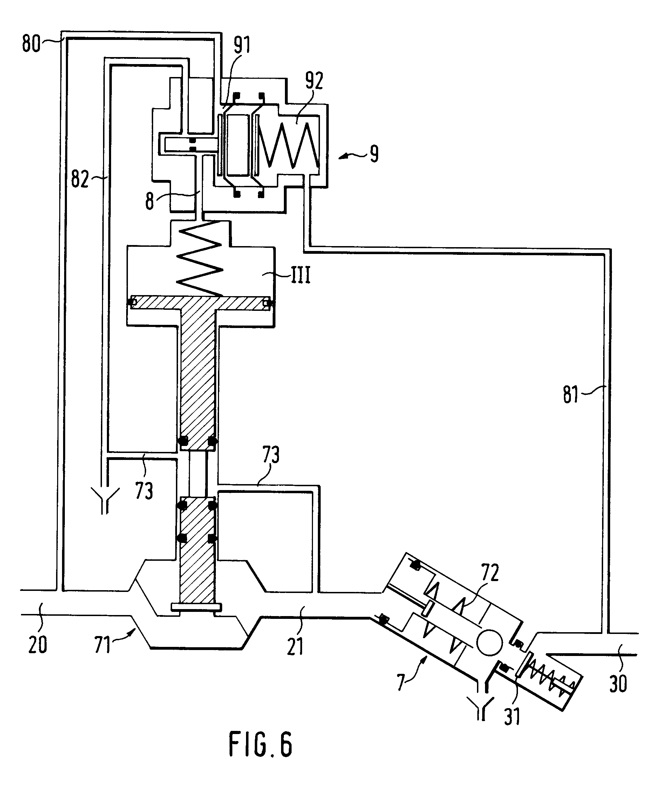

Gemäß den anhand der Fig. 1 bis 5 gezeigten Ausführungsbeispiele ist das vorsteuerventil 9 der Antriebskammer II des Rohrtrenners 1 direkt zugeordnet. Anhand der Fig. 6 wird gezeigt, daß die Antriebskammer III, welche den Rohrtrenner 1 steuert, diesem nicht direkt zugeordnet sein muß. Befindet sich nämlich der Antriebskolben 70 des Rohrtrenners 7 im Durchflußweg des Mediums selber, so erfolgt die eigentliche Steuerung des Rohrtrenners 7 mit Hilfe eines dem Rohrtrenner 7 vorgeschalteten Absperrventils 71. Das Absperrventil 71 dient dabei nicht nur dem Absperren der Zuflußleitung 20, sondern auch der Freigabe einer Entleerleitung 73 zur Entleerung des Leitungsabschnittes 21 zwischen dem Absperrventil 71 und dem Rohrtrenner 7, damit dieser bei abgesperrtem Absperrventil 71 durch die Wirkung einer Druckfeder 72 wieder in seine Schließstellung zurückkehren kann.

Das Vorsteuerventil 9 ist bei einer solchen Vorrichtung dem Rohrtrenner 7 nicht direkt, sondern nur indirekt zugeordnet, indem es die Antriebskammer III des Absperrventils 71 steuert. Aus diesem Grunde ist gemäß Fig. 6 die zuflußseitige Druckkammer 91 des Vorsteuerventils 9 auch nicht mit dem Leitungsabschnitt 21 zwischen dem Absperrventil 71 und dem Rohrtrenner 7, sondern mit der Zuflußseite des Absperrventils 71 (siehe Zuflußleitung 20) verbunden.

**Patentansprüche**

1. Vorsteuerventil eines zwischen einer Zuflußleitung (20) und einer Abflußleitung (30) angeordneten, über eine Antriebskammer steuerbaren Rohrtrenners, zur wechselweisen Verbindung der Antriebskammer mit der Zuflußleitung oder einer Entleerleitung, wobei das Vorsteuerventil (9) je eine mit der Zuflußleitung und der Abflußleitung in Verbindung stehende Druckkammer (91, 92) ein zwischen den Druckkammern angeordnetes, abflußseitig zusätzlich mit einem Sicherheitswert beaufschlagtes Druckvergleichselement (93) sowie ein vom Druckvergleichselement mit Hilfe zusammenarbeitender Anschläge (440, 45) antreibbares Steuerelement (4, 47) zum wechselweisen Herstellen oder Unterbrechen der Verbindung zwischen Antriebskammer und Zuflußleitung aufweist, **dadurch gekennzeichnet,** daß das Druckvergleichselement (93) und das Steuerelement (4, 47) einen zweiten Satz kooperierender Anschläge (441; 938, 982) aufweisen, die zu dem ersten Satz kooperierender Anschläge (440, 45) so angeordnet sind, daß sie bei einer Bewegungsumkehr des Druckvergleichselementes (93) eine Mitnahme des Steuerelementes (4, 47) erst nach Durchlaufen eines festgelegten Leerhubweges ($^L$H) zulassen, und daß die zuflußseitige Druckkammer (91) zwischen Druckvergleichselement (93) und Steuerelement (4, 47) angeordnet ist.

2. Ventil gemäß Anspruch 1, **gekennzeichnet durch** eine den Sicherheitsweit festlegende Druckfeder (937), welche das Druckvergleichselement (93) in gleicher Richtung wie die abflußseitige Druckkammer (92) beaufschlagt.

3. Ventil nach Anspruch 2, **dadurch gekennzeichnet ,** daß die Druckfeder (937) innerhalb der mit der Abflußseite des Rohrtrenners (1, 7) in Verbindung stehenden Druckkammer (92) angeordnet ist.

4. Ventil nach einem oder mehreren der Ansprüche 1 bis 3, **dadurch gekennzeichnet,** daß einer der beiden dem Steuerelement (4, 47) zugeordneten Anschläge (441) mit radialem Spiel in einer einseitig geschlossenen Bohrung (939) des Druckvergleichselementes (93) angeordnet und mit dem anderen Anschlag (46) des Steuerelementes (4) durch eine Kolbenstange (44) verbunden ist, die mit radialem Spiel durch einen Anschlagring (938) hindurchgeführt wird, welcher die beiden Anschläge des Druckvergleichselementes (93) bildet und sich mit axialem Spiel zwischen den beiden dem Steuerelement (4) zugeordneten Anschlägen (46, 441) befindet.

5. Ventil nach einem oder mehreren der Ansprüche 1 bis 4, **dadurch gekennzeichnet,** daß zur Aufnahme des dem Steuerelement (4, 47) zugeordneten Anschlages (441) das Druckvergleichselement (93) eine Büchse (933, 98) trägt, die an ihrem dem Steuerelement (4, 47) abgewandten Ende offen ist und an ihrem dem Steuerelement (4, 47) zugewandten Ende einen Anschlagring (938, 982) trägt.

6. Ventil nach einem oder mehreren der Ansprüche 1 bis 5, **dadurch gekennzeichnet,** daß das Steuerelement (4) in einer einseitig geschlossenen Bohrung (950) des Gehäuses (90) angeordnet ist und die den Druckkammern (91, 92) abgewandte Seite der Bohrung (950) durch eine Axialbohrung (43) im Steuerelement (4) mit der zwischen dem Steuerelement (4) und dem Druckvergleichselement (93) angeordneten Druckkammer (91) verbunden ist.

7. Ventil nach Anspruch 6, **dadurch gekennzeichnet,** daß die Kolbenstange (44) mit radialem Spiel durch die Axialbohrung (43) im Steuerelement (4) hindurch bis zu dem dem Druckvergleichselement (93) abgewandten Ende des Steuerelementes (4) reicht und hier einen Anschlag (440) zur Zusammenarbeit mit dem Steuerelement (4) trägt.

8. Ventil nach Anspruch 6 oder 7, **dadurch gekennzeichnet,** daß das Steuerelement (4) an seinem mit einem Anschlag (440, 938) zusammenarbeitenden Stirnende mindestens eine von der Axialbohrung (43) radial nach außen führende Nut (450, 460) aufweist.

9. Ventil nach einem oder mehreren der Ansprüche 1 bis 8, **dadurch gekennzeichnet,** daß die im Hubbereich des als Steuerekolben ausgebildeten Steuerelementes (4, 47) endende Entleerleitung (82) und die Verbindungsleitung (8) zur Antiebskammer (II, III) in Ringnuten (951, 952) im Gehäuse (90) enden, die beidseitig Anfasungen (956) aufweisen.

10. Ventil nach einem oder mehreren der Ansprüche 1 bis 9, **dadurch gekennzeichnet,** daß zwischen der Abflußseite des Rohrtrenners (1, 7) und der Druckkammer (92) eine Vorrichtung (831) vorgesehen ist, die bei den Rohrtrenner (1, 7) durchströmendem Medium einen Druckanstieg in der abflußseitigen Druckkammer (92) verhindert.

11. Ventil nach einem oder mehreren der Ansprüche 1 bis 10, **dadurch gekennzeichnet,** daß das Druckvergleichselement (93) zwei im Abstand voneinander angeordnete Rollmembranen (930, 931) aufweist und der von den Rollmembranen (930, 931) eingeschlossene Zwischenraum (941) über eine Belüftungsbohrung (940) mit der Atmosphäre in Verbindung steht.

12. Ventil nach einem oder mehreren der Ansprüche 1 bis 11, **dadurch gekennzeichnet,** daß das Druckvergleichselement (93) eine Querschnittsfläche aufweist, die ein Vielfaches der Querschnittsfläche des Steuerelementes (4, 47) beträgt.

13. Ventil nach Anspruch 12, **dadurch gekennzeichnet,** daß die Querschnittsfläche des Druckvergleichselementes (93) das 20- bis 50-fache der Querschnittsfläche des Steuerelementes (4, 47) beträgt.

14. Ventil nach einem oder mehreren der Ansprüche 2 bis 13, **dadurch gekennzeichnet,** daß der Leerhubweg ($L_H$) des Druckvergleichselementes (93) und die Federkonstante der Druckfeder (937) so aufeinander abgestimmt sind, daß das Druckvergleichselement (93) bei seiner Bewegung in Richtung zum Steuerelement (4, 47) erst bei Erreichen eines Druckunterschiedes zwischen Zuflußseite und Abflußseite von 0,1 bis 0,2 bar auf das Steuerelement (4, 47) aufläuft und dieses antreibt.

15. Ventil nach Anspruch 14, **dadurch gekennzeichnet,** daß das Verhältnis zwischen Leerhubweg ($L_H$) des Druckvergleichselementes (93) und Hubweg ($A_H$) des Steuerelementes (4, 47) im Bereich zwischen 2 : 1 und 3 : 1 liegt.

16. Ventil nach einem oder mehreren der Ansprüche 1 bis 15, **dadurch gekennzeichnet,** daß das Steuerelement (4, 47) und der das Steuerelement (4, 47) aufnehmende Gehäuseteil (95) aus Kunststoff bestehen.

17. Ventil nach einem oder mehreren der Ansprüche 11 bis 16, **dadurch gekennzeichnet,** daß der Gehäuseteil (94) zwischen den Rollmembranen (930, 931) sowie ein die Rollmembranen (930, 931) im Abstand voneinander haltendes Distanzstück (932) aus Kunststoff bestehen.

18. Ventil nach einem oder mehreren der Ansprüche 1 bis 17, für einen Rohrtrenner mit einer außerhalb des Durchflußweges des Mediums angeordneten Antriebskammer, **dadurch gekennzeichnet,** daß das Vorsteuerventil (9) der Antriebskammer (II) des Rohrtrenners (1) zugeordnet ist.

**19.** Ventil nach Anspruch 18, **dadurch gekennzeichnet,** daß das Vorsteuerventil (9) von einem den Rohrtrenner (1) mit einem diesem nachgeschalteten Rückflußverhinderer (31) verbindenden Rohrstück (32) getragen wird.

**20.** Ventil nach einem oder mehreren der Ansprüche 1 bis 17, für einen Rohrtrenner, der mit Hilfe eines dem Rohrtrenner vorgeschalteten, eine Antriebskammeer aufweisenden Absperrventils gesteuert wird, **dadurch gekennzeichnet,** daß das Vorsteuerventil (9) der Antriebskammer (III) des Absperrventils (71) zugeordnet ist und die zuflußseitige Druckkammer (91) des Vorsteuerventils (9) mit der Zuflußseite des Absperrventils (71) verbunden ist.

## Claims

**1.** A pilot valve of a pipe separator which is arranged between an inlet pipeline (20) and an outlet pipeline (30) and can be controlled by way of a drive chamber, for the alternate connection of the drive chamber to the inlet pipeline or an evacuating pipeline, the pilot valve (9) having in each case a pressure chamber (91, 92) connected to the inlet pipeline and the outlet pipeline, a pressure comparison element (93) arranged between the pressure chambers and being additionally acted upon on the outlet side with a safety value, and a control element (4,47) drivable by the pressure comparison element by means of cooperating stops (440,45) and being intended for the alternate production or interruption of the connection between the drive chamber and the inlet pipeline, characterised in that the pressure comparison element (93) and the control element (4,47) have a second set of cooperating stops (441; 938, 982) arranged in relation to the first set of cooperating stops (440,45) in such a manner that, on reversal of the movement of the pressure comparison element (93), they only permit the control element (4, 47) to be carried along after a defined idle-stroke path ($L_H$) has been covered, and in such a manner that the pressure chamber (91) on the inlet side is arranged between the pressure comparison element (93) and the control element (4, 47).

**2.** A valve in accordance with Claim 1, characterised by a pressure spring (937) which defines the safety value and acts upon the pressure comparison element (93) in the same direction as the pressure chamber (92) on the outlet side.

**3.** A valve in accordance with Claim 2, characterised in that the pressure spring (937) is arranged within the pressure chamber (92) connected to the outlet side of the pipe separator (1, 7).

**4.** A valve according to one or more of Claims 1 to 3, characterised in that one of the two stops (441) assigned to the control element (4, 47) is arranged with radial play in a bore (939) of the pressure comparison element (93), this bore being closed on one side, and is connected to the other stop (46) of the control element (4) by a piston rod (44) guided through a stop ring (938) with radial play, the stop ring forming the two stops of the pressure comparison element (93) and being located with axial play between the two stops (46, 441) assigned to the control element (4).

**5.** A valve according to one or more of Claims 1 to 4, characterised in that, in order to receive the stop (441) assigned to the control element (4, 47), the pressure comparison element (93) carries a sleeve (933, 98) open at its end facing away from the control element (4, 47) and carrying a stop ring (938, 982) at its end facing towards the control element (4, 47).

**6.** A valve according to one or more of Claims 1 to 5, characterised in that the control element (4) is arranged in a bore (950) of the housing (90), this bore being closed on one side, and the side - facing away from the pressure chambers (91, 92) - of the bore (950) being connected to the pressure chamber (91), which is arranged between the control element (4) and the pressure comparison element (93), by an axial bore (43) in the control element (4).

**7.** A valve according to Claim 6, characterised in that the piston rod (44) extends with radial play through the axial bore (43) in the control element (4) up to the end - facing away from the pressure comparison element (93) - of the control element (4) and here carries a stop (440) for cooperating with the control element (4).

**8.** A valve according to Claim 6 or 7, characterised in that, on its front end cooperating with a stop (440, 938), the control element (4) has at least one groove (450, 460) extending radially outwards from the axial bore (43).

**9.** A valve according to one or more of Claims 1 to 8, charaterised in that the evacuating pipeline (82), ending in the stroke region of the control element (4, 47) formed as control piston, and the connecting pipeline (8) to the drive chamber (II, II) end in annular grooves (951, 952) in the housing (90), the annular grooves having chamfering (956) on both sides.

10. A valve according to one or more of Claims 1 to 9, characterised in that a device (831) is provided between the outlet side of the pipe separator (1, 7) and the pressure chamber (92), the device preventing an increase in pressure in the pressure chamber ((2) on the outlet side when medium is flowing through the pipe separator (1, 7).

11. A valve according to one or more of Claims 1 to 10, characterised in that the pressure comparison element (93) has two rolling membranes (930, 931) arranged at a distance from one another and the interspace (941) enclosed by the rolling membranes (930, 931) is connected to the atmosphere by way of a ventilating bore (940).

12. A valve according to one or more of Claims 1 to 11, characterised in that the pressure comparison element (93) has a cross-sectional area which is many times the cross-sectional area of the control element (4, 47).

13. A valve according to Claim 12, characterised in that the cross-sectional area of the pressure comparison element (93) is 20 to 50 times the cross-sectional area of the control element (4, 47).

14. A valve according to one or more of Claims 2 to 13, characterised in that the idle-stroke path ($L_H$) of the pressure comparison element (93) and the spring constant of the pressure spring (937) are coordinated in such a manner that, on its movement in the direction of the control element (4, 47), the pressure comparison element (93) only runs up against and drives the control element (4, 47) once a pressure difference of 0.1 to 0.2 bar has been reached between the inlet side and the outlet side.

15. A valve according to Claim 14, characterised in that the ratio between the idle-stroke path ($L_H$) of the pressure comparison element (93) and the stroke path ($A_H$) of the control element (4, 47) is in the range between 2 : 1 and 3 : 1.

16. A valve according to one or more of Claims 1 to 15, characterised in that the control element (4, 47) and the housing part (95) receiving the control element (4, 47) consist of synthetic material.

17. A valve according to one or more of Claims 11 to 16, characterised in that the housing part (94) between the rolling membranes (930, 931) and a distance piece (932), which holds the rolling membranes (930, 931) at a distance from one another, consist of synthetic material.

18. A valve according to one or more of Claims 1 to 17, for a pipe separator with a drive chamber arranged outside the flow path of the medium, characterised in that the pilot valve (9) is assigned to the drive chamber (II) of the pipe separator (1).

19. A valve according to Claim 18, characterised in that the pilot valve (9) is supported by a pipe piece (32) connecting the pipe separator (1) to a backflow preventer (31) connected thereafter.

20. A valve according to one or more of Claims 1 to 17, for a pipe separator controlled by means of a shut-off valve which is connected before the pipe separator and has a drive chamber, characterised in that the pilot valve (9) is assigned to the drive chamber (III) of the shut-off valve (71) and the pressure chamber (91) on the inlet side of the pilot valve (9) is connected to the inlet side of the shut-off valve (71).

**Revendications**

1. Robinet pilote d'une vanne de sectionnement sur tuyauterie, disposée entre une conduite d'arrivée (20) et une conduite de départ (30) et pouvant être pilotée par l'intermédiaire d'une chambre de commande, pour relier alternativement la chambre de commande avec la conduite d'arrivée ou avec une conduite de purge, étant précisé que le robinet pilote (9) présente respectivement une chambre de pression (91, 92) qui est reliée avec la conduite d'arrivée et avec la conduite de départ, un élément de comparaison de la pression (93), qui est disposé entre les chambres de pression et qui est en outre contraint, du côté du départ, par une valeur de sécurité, ainsi qu'un élément pilote (4, 47), qui peut être commandé par l'élément de comparaison de la pression avec l'aide de butées (440, 45), qui coopèrent ,pôur, alternativement, établir ou interrompre la liaison entre la chambre de commande et la conduite d'arrivée, robinet caractérisé par le fait que l'élément de comparaison de la pression (93) et l'élément pilote (4, 47) présentent un deuxième jeu de butées coopérantes (441; 938, 982) qui, par rapport au premier jeu de butées coopérantes (440, 45), sont disposées de façon que, lors d'une inversion du mouvement de l'élément de comparaison de la pression (93), elles n'autorisent un entrainement de l'élément pilote (4, 47) qu'après parcours d'une course à vide déterminée ($l_H$), et par le fait que la chambre de pression (91) située du côté de l'arrivée est disposée entre l'élément de comparaison de la pression (93) et l'élément pilote (4, 47).

2. Robinet selon la revendication 1 caractérisé par un ressort de pression (937), qui détermine la valeur de sécurité et qui contraint l'élément de comparaison de la pression (93) dans le même sens que la chambre de pression (92) située du côté du départ.

3. Robinet selon la revendication 2, caractérisé par le fait que le ressort de pression (937) est disposé à l'intérieur de la chambre de pression (92) qui est reliée avec le côté départ de la vanne de sectionnement sur tuyauterie (1, 7).

4. Robinet selon une ou plusieurs des revendications 1 à 3, caractérisé par le fait que l'une des deux butées (441) correspondant à l'élément pilote (4, 47) est disposée, avec un jeu radial, dans un perçage (939), obturé d'un côté, de l'élément de comparaison de la pression (93) et est reliée avec l'autre butée (46) de l'élément pilote (4) par une tige de piston (44) qui passe, avec un jeu radial, à travers un collet de butée (938) qui forme les deux butées de l'élément de comparaison de la pression (93) et se trouve, avec un jeu axial, entre les deux butées (46, 441) correspondant à l'élément pilote (4).

5. Robinet selon l'une ou plusieurs des revendications 1 à 4, caractérisé par le fait que pour recevoir la butée (441) correspondant à l'élément pilote (4, 47), l'élément de comparaison de la pression (93) porte un manchon (933, 98) qui est ouvert à son extrémité éloignée de l'élément pilote (4, 47) et qui, à son extrémité proche de l'élément pilote (4, 47), porte un collet de butée (938, 982).

6. Robinet selon l'une ou plusieurs des revendications 1 à 5, caractérisé par le fait que l'élément pilote (4) est disposé dans un perçage (950), fermé d'un côté, du carter (90) et par le fait que le côté du perçage (950) éloigné des chambres de pression (91 92) est relié, par un perçage axial (43) prévu dans l'élément pilote (4), avec la chambre de pression (91) disposée entre l'élément pilote (4) et l'élément de comparaison (93).

7. Robinet selon la revendication 6, caractérisé par le fait que la tige de piston (44) en passant, avec un jeu radial, dans le perçage axial (43) prévu dans l'élément pilote (4), atteint jusqu'à l'extrémité de l'élément pilote (4) éloignée de l'élément de comparaison de la pression (93) et porte ici une butée (440) pour collaborer avec l'élément pilote (4).

8. Robinet selon la revendication 6 ou 7, caractérisé par le fait que l'élément pilote (4) présente, à son extrémité frontale qui collabore avec une butée (440, 938), au moins une rainure (450, 460) partant du perçage axial (43) et orientée radialement vers l'extérieur.

9. Robinet selon l'une ou plusieurs des revendications 1 à 8, caractérisé par le fait que la conduite de vidange (82) qui se termine dans la zone du moyeu de l'élément pilote (4, 47) conçu sous forme d'un piston pilote, et la conduite (8) de liaison avec la chambre de commande (II, III) débouchent, dans le carter (90) dans des rainures annulaires (951, 952) qui présentent des chanfreins (956) des deux côtés.

10. Robinet selon l'une ou plusieurs des revendications 1 à 9, caractérisé par le fait qu'entre le côté sortie de la vanne de sectionnement sur tuyauterie (1, 7) et la chambre de pression (92) est prévu un dispositif (831) qui, lorsque le fluide passe à travers la vanne de sectionnement sur tuyauterie, empêche une montée en pression dans la chambre de pression (92) située du côté sortie.

11. Robinet selon l'une ou plusieurs des revendications 1 à 10, caractérisé par le fait que l'élément de comparaison de la pression (93) présente deux membranes déroulantes (930, 931) disposées à une certaine distance l'une de l'autre, et par le fait que l'espace intermédiaire (941) enclos par les deux membranes déroulantes (930, 931) est relié à l'atmosphère par l'intermédiaire d'un perçage de mise à l'atmosphère (940).

**12.** Robinet selon l'une des revendications 1 à 11, caractérisé par le fait que l'élément de comparaison de la pression (93) présente, en section, une surface qui est un multiple de la surface de la section de l'élément pilote (4, 47).

**13.** Robinet selon la revendication 12, caractérisé par le fait que la surface de la section de l'élément de comparaison de la pression (93) vaut 20 à 50 fois la surface de la section de l'élément pilote (4, 47).

**14.** Robinet selon l'une ou plusieurs des revendications 2 à 13, caractérisé par le fait que la course à vide ($l_H$) de l'élément de comparaison de la pression (93) et la constante élastique du ressort de pression (937) sont accordées l'une à l'autre de façon telle que, lors de son mouvement en direction de l'élément pilote (4, 47), l'élément de comparaison de la pression (93) ne vient en contact avec l'élément pilote (4, 47), et n'entraine celui-ci, que lorsqu'a été atteinte entre le côté entrée et le côté sortie une différence de pression de 0,1 à 0,2 bar.

**15.** Robinet selon la revendication 14, caractérisé par le fait que le rapport entre la course à vide ($l_H$) de l'élément de comparaison de la pression (93) et la course ($A_H$) de l'élément pilote (4, 47) se situe sur la plage entre 2 : 1 et 3 : 1.

**16.** Robinet selon l'une ou plusieurs des revendications 1 à 15, caractérisé par le fait que l'élément pilote (4, 47) et la partie (95) du carter qui reçoit l'élément pilote (4, 47) sont en matière plastique.

**17.** Robinet selon l'une ou plusieurs des revendications 11 à 16, caractérisé par le fait que la partie (94) du carter située entre les membranes déroulantes (930, 931), ainsi qu'une pièce d'écartement (932) qui maintient les membranes déroulantes (930, 931) à distance l'une de l'autre, sont en matière plastique.

**18.** Robinet selon l'une ou plusieurs des revendications 1 à 17, pour une vanne de sectionnement sur tuyauterie comportant une chambre de commande disposée en dehors du chemin de passage du fluide, caractérisé par le fait que le robinet pilote (9) correspond à la chambre de commande (II) de la vanne de sectionnement sur tuyauterie (1).

**19.** Robinet selon la revendication 18, caractérisé par le fait que le robinet pilote (9) est porté par un élément tubulaire (32), qui relie la vanne de sectionnement sur tuyauterie (1) avec un clapet antiretour (31) monté en aval de cette vanne.

**20.** Robinet selon l'une ou plusieurs des revendications 1 à 17, pour une vanne de sectionnement sur tuyauterie pilotée à l'aide d'un robinet d'arrêt présentant une chambre de commande placée en amont de la vanne de sectionnement sur tuyauterie, caractérisé par le fait que le robinet pilote (9) correspond à la chambre de commande (III) du robinet d'arrêt (71) et que la chambre de pression (91), située du côté arrivée, du robinet pilote (9) est reliée avec le côté arrivée du robinet d'arrêt (71).

EP 0 278 333 B1

FIG. 1

17

FIG.2

FIG. 3

FIG.4

FIG.5

FIG.6